(19) **Europäisches Patentamt / European Patent Office / Office européen des brevets**

(11) **EP 3 747 671 B1**

(12) **EUROPEAN PATENT SPECIFICATION**

(45) Date of publication and mention
of the grant of the patent:
**16.08.2023 Bulletin 2023/33**

(21) Application number: **19748318.3**

(22) Date of filing: **01.02.2019**

(51) International Patent Classification (IPC):
**B60C 11/03** (2006.01)     **B60C 11/11** (2006.01)

(52) Cooperative Patent Classification (CPC):
**B60C 11/0302; B60C 11/11;** B60C 2200/10;
B60C 2200/14

(86) International application number:
**PCT/JP2019/003733**

(87) International publication number:
**WO 2019/151505 (08.08.2019 Gazette 2019/32)**

(54) **MOTORCYCLE TIRE**

MOTORRADREIFEN

PNEU DE MOTOCYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.02.2018 JP 2018016986**

(43) Date of publication of application:
**09.12.2020 Bulletin 2020/50**

(73) Proprietor: **Bridgestone Corporation**
**Chuo-Ku**
**Tokyo 104-8340 (JP)**

(72) Inventor: **MATSUDA, Mitsuyuki**
**Tokyo 104-8340 (JP)**

(74) Representative: **Marks & Clerk LLP**
**15 Fetter Lane**
**London EC4A 1BW (GB)**

(56) References cited:
EP-A1- 2 546 079       WO-A1-2017/187295
JP-A- 2001 071 711     JP-A- 2005 193 784
JP-A- 2005 193 784     JP-A- 2008 120 351
JP-A- 2012 030 615     JP-A- 2012 136 186
JP-A- 2013 035 537     JP-A- 2015 134 578
US-A1- 2014 318 675

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a motorcycle tire (hereinafter, also simply referred to as "tire"), particularly a motorcycle tire which exhibits an improved grip performance in turning as compared to the prior art while ensuring traction performance.

BACKGROUND ART

Motorcycle tires for traveling on rough terrain, which are intended to be used on rough terrain such as sandy terrain and muddy terrain, include a tread portion employing a block pattern in which plural blocks are arranged. Today, a variety of tread patterns are proposed for such tires. For example, Patent Document 1 proposes a motorcycle tire that has improved not only linear traction performance but also turning performance.

Specifically, Patent Document 1 proposes a motorcycle tire in which blocks arranged in the tread portion are divided into center blocks, intermediate blocks and shoulder blocks, wherein the center blocks are provided with edges perpendicular to the circumferential direction and a large width with respect to the tire width direction so as to improve the linear traction performance of the center blocks, and overlapping parts between the center blocks and the intermediate blocks in the tire circumferential direction are eliminated so as to improve the grip performance in turning. Attention is also drawn to the disclosures of EP2546079A1, JP2001-071711A and JP2005-193784A.

RELATED ART DOCUMENT

PATENT DOCUMENT

[Patent Document 1] JP2015-113111A

SUMMARY OF THE INVENTION

PROBLEMS TO BE SOLVED BY THE INVENTION

Today, in tires for motocross and enduro that are intended to be used on rough terrain, there is an increasing demand for linear traction performance as well as grip performance in turning, and a further improvement is needed at present.

In view of the above, an object of the present invention is to provide a motorcycle tire that exhibits an improved grip performance in turning as compared to the prior art while ensuring traction performance.

MEANS FOR SOLVING THE PROBLEMS

The present inventor intensively studied to solve the above-described problems and consequently discovered that, in a tire including center blocks formed on its equator, intermediate blocks formed on each tire width-direction outer side of the center blocks, and shoulder blocks constituting the outermost blocks in the tire width direction, the above-described problems can be solved by optimizing the arrangement positions of the center blocks and the intermediate blocks in both the tire circumferential direction and the tire width direction, thereby completing the present invention.

That is, the motorcycle tire of the present invention is a motorcycle tire as claimed in claim 1.

In the tire of the present invention, it is preferred that the farther the intermediate blocks are positioned on a rotational-direction trailing side from the respective shoulder blocks, the farther the tire width-direction outermost ends of the intermediate blocks are located on a tire width-direction inner side.

EFFECTS OF THE INVENTION

According to the present invention, a motorcycle tire which exhibits an improved grip performance in turning as compared to the prior art while ensuring traction performance can be provided. The tire of the present invention can be preferably used as a tire for motocross and enduro that is intended to be used on rough terrain including muddy terrain, and the tire of the present invention is particularly suitable as a rear tire.

BRIEF DESCRIPTION OF THE DRAWINGS

[FIG. 1] FIG. 1 is a development view illustrating a tread portion of a motorcycle tire according to one preferred embodiment of the present invention.

[FIG. 2] FIG. 2 is a cross-sectional view taken along a line X-X of the motorcycle tire illustrated in FIG. 1.

[FIG. 3A] FIG. 3A provides a plan view of a first intermediate block of a motorcycle tire according to one preferred embodiment of the present invention.

[FIG. 3B] FIG. 3B provides a plan view of a second intermediate block of a motorcycle tire according to one preferred embodiment of the present invention.

[FIG. 3C] FIG. 3C provides a plan view of a shoulder block of a motorcycle tire according to one preferred embodiment of the present invention.

MODE FOR CARRYING OUT THE INVENTION

The motorcycle tire of the present invention will now be described referring to the drawings.

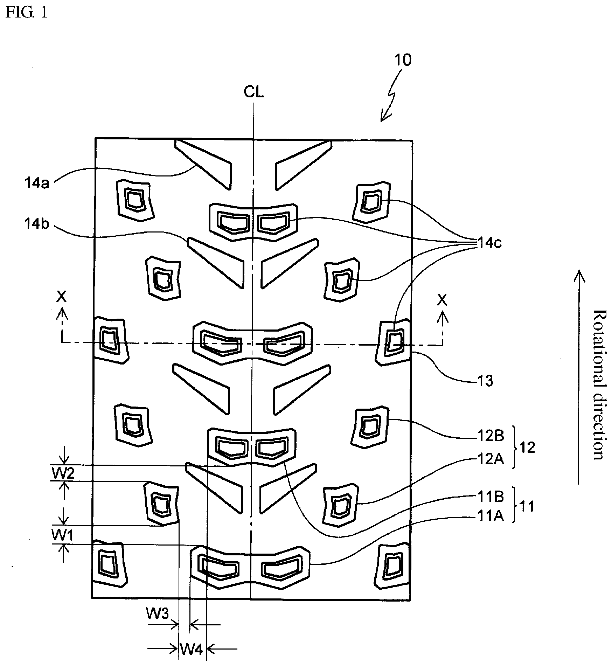

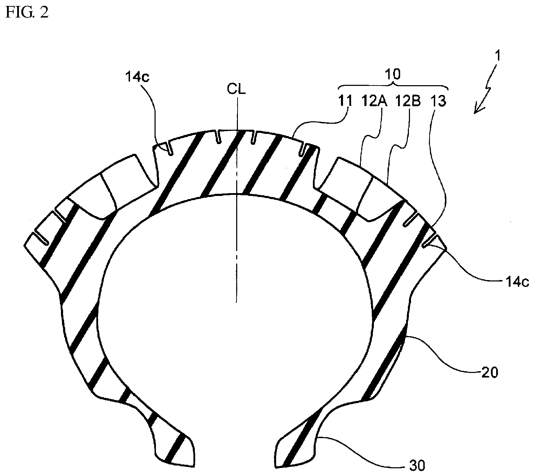

FIG. 1 is a development view illustrating a tread portion of a motorcycle tire according to one preferred embodiment of the present invention, and FIG. 2 is a cross-sectional view taken along a line X-X of the motorcycle tire illustrated in FIG. 1. An arrow in FIG. 1 indicates the rotational direction and, during traveling, the tire comes into contact with the ground from the side of the arrow. A motorcycle tire 1 of the present invention includes: a tread portion 10 which is formed in an annular shape; and side wall portions 20 and bead portions 30, which continuously extend on the respective sides of the tread portion 10. In addition, the tire 1 of the present invention includes: center blocks 11 which are formed on a tire equator CL in the tread portion 10; intermediate blocks 12 which are formed on each tire width-direction outer side of the center blocks 11; and shoulder blocks 13 which are the outermost blocks in the tire width direction.

In the illustrated tire 1 according to one preferred embodiment of the present invention, the center blocks 11 are composed of two kinds of center blocks, which are center blocks 11A and center blocks 11B that have different lengths in the tire width direction, and these center blocks constitute a center block row. The intermediate blocks 12 are composed of two kinds of blocks that have different positions in the tire width direction, and first intermediate blocks 12A on the tire width-direction inner side and second intermediate blocks 12B on the tire width-direction outer side each constitute an intermediate block row. Further, the shoulder blocks 13, which are the outermost blocks in the tire width direction, constitute shoulder block rows. These center blocks 11, first intermediate blocks 12A, second intermediate blocks 12B, and shoulder blocks 13 are arranged over the whole circumference at prescribed intervals along the tire circumferential direction. Moreover, in the illustrated example, the center blocks 11 are formed in a line-symmetrical manner about the tire equator CL and each have a polygonal shape in which the length in the tire width direction is greater than the length in the tire circumferential direction and the tire width-direction outer ends are slightly inclined with an angle toward the rotational direction. Furthermore, in the illustrated example, the intermediate blocks 12A and 12B and the shoulder blocks 13 are also formed in a line-symmetrical manner about the tire equator CL.

In the tire 1 of the present invention, the center blocks 11 are separated from the intermediate blocks 12A, which constitute the tire width-direction innermost intermediate block row among intermediate block rows, in both the tire circumferential direction and the tire width direction. In this motorcycle tire at the time of turning without being tilted at a large angle, the center blocks 11 come into contact with the ground simultaneously with the intermediate blocks 12A, and it is believed that, in this process, the center blocks 11 bear a force applied in the anteroposterior direction, while the intermediate blocks 12A bear a force applied in the lateral direction. When the center blocks 11 and the intermediate blocks 12A overlap with each other in the tire circumferential direction and the tire width direction, the center blocks 11 and the intermediate blocks 12A are put on the same plane, and this makes the walls of the intermediate blocks 12A on the tire equator CL side unable to sufficiently exert an edge effect against the lateral direction.

Therefore, in the tire 1 of the present invention, a gap W1 between the respective center blocks 11A and intermediate blocks 12A in the tire circumferential direction, a gap W2 between the respective center blocks 11B and intermediate blocks 12A in the tire circumferential direction, a gap W3 between the center blocks 11A and the intermediate blocks 12A in the tire width direction, and a gap W4 between the center blocks 11B and the intermediate blocks 12A in the tire width direction are arranged, whereby the center blocks 11 and the intermediate blocks 12A, which constitute the tire width-direction innermost intermediate block row among intermediate block rows, are configured not to overlap with each other in both the tire circumferential direction and the tire width direction. In the illustrated example, these gaps W1, W2, W3 and W4 are arranged between the center blocks 11A, which are elongated along the tire width direction, and the first intermediate blocks 12A. By this, overlapping of edge components is inhibited in both the tire circumferential direction and the tire width direction, so that the grip performance in turning is improved as compared to the prior art while ensuring linear traction performance. Preferably, all of the intermediate blocks are separated from the center blocks 11 in both the tire circumferential direction and the tire width direction. When only a single intermediate block row is arranged, this intermediate block row corresponds to the tire width-direction innermost intermediate block row.

In the tire 1 of the present invention, in order to ensure traction performance, the W1 and the W2 are each preferably 7 to 15 mm. Further, in order to improve the grip performance in turning, the W3 and the W4 are each preferably 4 to 18 mm.

In the tire 1 of the present invention, it is preferred that the farther the intermediate blocks 12 are positioned on a rotational-direction trailing side from the respective shoulder blocks 13, the farther the tire width-direction outermost ends of the intermediate blocks 12 are located on a tire width-direction inner side. In other words, as illustrated, it is preferred that the tire width-direction outermost ends of the intermediate blocks 12B arranged on the rotational-direction trailing side of the shoulder blocks 13 are located on the tire width-direction inner side than the tire width-direction outermost ends of the shoulder blocks 13, and that the tire width-direction outermost ends of the intermediate blocks 12A arranged farther on the rotational-direction trailing side are located on the tire width-direction inner side than the tire width-direction outermost ends of the intermediate blocks 12B. By adopting this configuration, the effects of the present invention can be attained more favorably.

Further, in the tire 1 of the present invention, as illustrated, the walls of the intermediate blocks 12 on the tire equator CL side have a concave shape, and the walls of the shoulder blocks 13 on the tire equator CL side have a concave shape. By configuring the walls of the intermediate blocks 12 and the shoulder blocks 13 on the tire equator CL side to have a concave shape in this manner, a force applied in the lateral direction can be more effectively mitigated as compared to a case where the walls are straight, so that the grip performance can be further improved. For example, the cornering grip performance of small-to-medium camber regions can be improved by configuring the walls of the intermediate blocks 12A, which constitute the tire width-direction innermost intermediate block row among intermediate block rows, to have a concave shape on the tire equator CL side. In the tire 1 of the present invention, the concave shape is not particularly restricted and, for example, the walls on the tire equator CL side may each have a structure constituted by two linear wall sections as illustrated, or may have a circular-arc or rectangular shape connecting the rotational-direction leading end and the rotational-direction trailing end.

In the tire 1 of the present invention, as illustrated, the intermediate blocks 12 are composed of two kinds of blocks 12A and 12B which have different positions in the tire width direction, and the walls on the tire equator CL side of the first intermediate blocks 12A arranged on the tire width-direction inner side, the walls on the tire equator CL side of the second intermediate blocks 12B arranged on the tire width-direction outer side, and the walls on the tire equator CL side of the shoulder blocks 13 all have a concave shape.

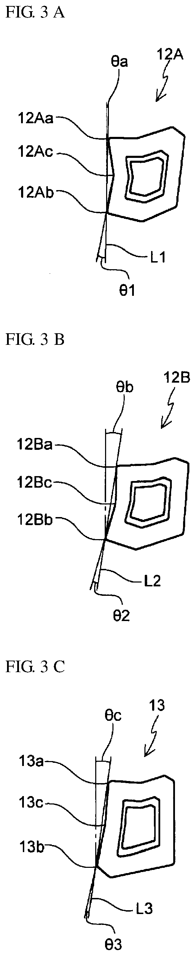

FIGS. 3A to 3C provide plan views of intermediate and shoulder blocks of a motorcycle tire according to one preferred embodiment of the present invention, and specifically FIGS. 3A, 3B and 3C illustrate a first intermediate block, a second intermediate block and a shoulder block, respectively. In the tire 1 of the present invention, as illustrated, the number of the intermediate block rows is two and, when a smaller of angles that are formed by a straight line L1, which connects a rotational-direction leading end 12Aa and a rotational-direction trailing end 12Ab of a wall on the tire equator CL side, and a line connecting the rotational-direction trailing end 12Ab and a point 12Ac of the wall on the tire equator CL side that is the farthest away from the straight line L1 in the respective first intermediate blocks 12A is defined as $\theta1$; a smaller of angles that are formed by a straight line L2, which connects a rotational-direction leading end 12Ba and a rotational-direction trailing end 12Bb of a wall on the tire equator CL side, and a line connecting the rotational-direction trailing end 12Bb and a point 12Bc of the wall on the tire equator CL side that is the farthest away from the straight line L2 in the respective second intermediate blocks 12B is defined as $\theta2$; and a smaller of angles that are formed by a straight line L3, which connects a rotational-direction leading end 13a and a rotational-direction trailing end 13b of a wall on the tire equator CL side, and a line connecting the rotational-direction trailing end 13b and a point 13c of the wall on the tire equator CL side that is the farthest away from the straight line L3 in the respective shoulder blocks 13 is defined as $\theta3$, a relationship represented by the following formula (1) is satisfied:

$$\theta1 > \theta2 > \theta3 \qquad (1).$$

In other words, the intermediate blocks 12 are arranged in two rows, the walls of all of the intermediate blocks 12 and the shoulder blocks 13 have a concave shape on the tire equator CL side, and the concave angles $\theta1$, $\theta2$ and $\theta3$ of the wall of each block on the tire equator CL side are sequentially smaller toward the tire width-direction outer side. This configuration allows the first intermediate blocks 12A closer to the tire equator CL to sufficiently mitigate a lateral force, whereby grip performance can be ensured. Meanwhile, by reducing the inclination of the concave walls toward the tire width-direction outer side from the second intermediate blocks 12B to the shoulder blocks 13, a lateral force applied to the medium-to-large camber regions during cornering can be released, allowing the tire to slide.

In order to favorably attain these effects, it is preferred that the angles $\theta1$, $\theta2$ and $\theta3$ be as follows:

$$6° \leq \theta1 \leq 12°,$$

$$3° \leq \theta2 \leq 8°,$$

and

$$1° \leq \theta3 \leq 5°.$$

Further, in the tire 1 of the present invention, it is preferred that a relationship represented by the following formula (2) be satisfied with regard to an angle θa of the straight line L 1 with respect to the tire circumferential direction, an angle θb of the straight line L2 with respect to the tire circumferential direction, and an angle θc of the straight line L3 with respect to the tire circumferential direction:

$$\theta c > \theta b > \theta a \qquad (2)$$

In other words, it is preferred that the farther a block is arranged on the tire width-direction outer side, the larger the inclination of the wall of the block on the tire equator CL side with respect to the tire circumferential direction becomes. When this relationship is satisfied, the first intermediate blocks 12A closer to the tire equator CL can sufficiently mitigate a lateral force, so that the grip performance can be further improved and, by increasing the inclination of the walls on the tire equator CL side with respect to the tire circumferential direction toward the shoulder side from the second intermediate blocks 12B to the shoulder blocks 13, a lateral force can be released more favorably, allowing the tire to slide.

The angles θa, θb and θc are preferably as follows:

$$0° \leq \theta a \leq 7°,$$

$$5° \leq \theta b \leq 10°,$$

and

$$8° \leq \theta c \leq 15°.$$

In the tire 1 of the present invention, what is important is only that the blocks arranged in the tread portion 10 satisfy the above-described relationships. This enables to attain the expected effects of the present invention, and other conditions, such as the structure and the material of the tire, are not particularly restricted.

In the illustrated example, two kinds of recesses, 14a and 14b, are arranged in the vicinity of the tire equator CL over the whole circumference at prescribed intervals along the tire circumferential direction such that the respective recesses are line symmetrical about the tire equator CL. In the illustrated example, these recesses 14a and 14b are inclined on the tire width-direction outer side toward the rotational direction. Further, in the illustrated example, a recess 14c is formed on each of the blocks 11, 12A, 12B and 13. In the illustrated example, the recess 14c is formed on all of the blocks; however, in the tire 1 of the present invention, the recess may be formed only on some of the blocks. Still further, in the tire 1 of the present invention, the heights of the center blocks 11, intermediate blocks 12 and shoulder blocks 13 as well as the depths of the recesses 14a, 14b and 14c are not particularly restricted, and can be designed as appropriate in accordance with the intended purpose.

In the tire 1 of the present invention, at least one carcass ply can be used as a skeleton, and at least one belt layer can be arranged on the tire radial-direction outer side of the carcass ply in the tread portion 10. This belt layer may be, for example, a spiral belt layer that is composed of a rubber-coated cord spirally wound along the circumferential direction. In addition, bead fillers may be arranged on the tire radial-direction outer side of the respective bead cores. Examples of a reinforcing material constituting the belt layer include nylon fibers, aromatic polyamides (trade name: KEVLAR), and steel. Thereamong, aromatic polyamides and steel do not elongate even at high temperatures and are thus capable of inhibiting swelling of the tread portion.

Further, in the carcass ply serving as the skeleton of the tire 1 of the present invention, relatively high-elasticity textile cords are arranged in parallel to one another. The number of carcass plies may be one, two, or three or more. The ends of each carcass ply may be folded around the respective bead cores from the inside to the outside of the tire and thereby anchored or may be sandwiched by bead wires from both sides and thereby anchored, and either of these fixation methods may be employed. In addition, an inner liner may be arranged as the innermost layer of the tire.

Still further, in the tire 1 of the present invention, the tread portion 10 may have a bilayer structure constituted by a cap rubber on the tread surface side and a base rubber on the tread bottom side, and the cap rubber and the base rubber may be different in hardness. By allowing a tread rubber to have such a bilayer structure of the cap rubber and the base rubber that are different in hardness, necessary properties can be ensured without modifying the rigidity of the blocks as a whole by adopting, for example, a combination of a hard cap rubber and a soft base rubber, or a combination of a soft cap rubber or a hard base rubber, in accordance with the road surface conditions. The hardness of the cap rubber and that of the base rubber can be adjusted by appropriately selecting a rubber composition and a filler thereof in accordance with a conventional method.

The tire 1 of the present invention exhibits an improved grip performance in turning as compared to the prior art while ensuring traction performance and, therefore, can be preferably used as a tire for motocross and enduro that is intended to be used on rough terrain including muddy terrain. The tire 1 of the present invention is particularly suitable as a rear tire.

EXAMPLES

The tire of the present invention will now be described in more detail by way of Examples thereof.

<Examples 1 to 5>

Tires of the type illustrated in FIG. 1, which include center blocks, first intermediate blocks, second intermediate blocks and shoulder blocks, are each produced at a tire size of 140/80-18M/C. The gap W1 between the respective center blocks 11A and intermediate blocks 12A in the tire circumferential direction, the gap W2 between the respective center blocks 11B and intermediate blocks 12A in the tire circumferential direction, the gap W3 between the center blocks 11A and the intermediate blocks 12A in the tire width direction, the gap W4 between the center blocks 11B and the intermediate blocks 12A in the tire width direction, and the concave angles $\theta 1$, $\theta 2$ and $\theta 3$ are as shown in Table 1 below.

<Comparative Example 1>

A tire of the same type as the tires of Examples 1 to 5, which includes center blocks, first intermediate blocks, second intermediate blocks and shoulder blocks but the center blocks and the first intermediate blocks overlap with each other in the tire circumferential direction, is produced. The gap W1 between the respective center blocks 11A and intermediate blocks 12A in the tire circumferential direction, the gap W2 between the respective center blocks 11B and intermediate blocks 12A in the tire circumferential direction, the gap W3 between the center blocks 11A and the intermediate blocks 12A in the tire width direction, the gap W4 between the center blocks 11B and the intermediate blocks 12A in the tire width direction, and the concave angles $\theta 1$, $\theta 2$ and $\theta 3$ are as shown in Table 1 below.

For each of the thus obtained tires, the traction performance and the grip performance are evaluated by the below-described respective procedures. It is noted here that an off-road tire is required to slide and thereby quickly change the vehicle orientation, rather than firmly hold the road surface to turn the vehicle at the time of cornering as in the case of an on-road tire. This is because an off-road bike hardly ever turns a wide corner of a circuit or the like and is thus required to perform abrupt changes in direction in tight places. Therefore, gripping is emphasized in cornering in those regions where the vehicle body is not much tilted, while sliding is emphasized in cornering performed by tilting the vehicle body. Accordingly, the below-described evaluation items, which are the grip performance and the maneuverability, are evaluated for the intermediate blocks and the shoulder blocks, respectively.

<Traction Performance>

The traction performance is evaluated using a vehicle fitted with each tire. This evaluation of the traction performance is made based on the driver's feel. The evaluation results are presented as index values, taking the evaluation of the tire of Example 4 as 100. The thus obtained results are shown together in Table 1. It is noted here that each tire can exhibit a sufficient traction performance as long as the index value is 100 or larger.

<Grip Performance>

The grip performance is evaluated by driving a vehicle fitted with each tire on a wet road surface. This evaluation of the grip performance is made based on the driver's feel. The evaluation results are presented as index values, taking the evaluation of the tire of Example 4 as 100. The thus obtained results are shown together in Table 1.

<Maneuverability>

The maneuverability (sliding) on wet road surface is evaluated using a vehicle fitted with each tire. The maneuverability, which is an index of sliding that occurs when the tire is largely tilted, is evaluated based on the driver's feel. The evaluation results are presented as index values, taking the evaluation of the tire of Example 4 as 100. The thus obtained results are shown together in Table 1.

[Table 1]

|  | Example 1 | Example 2 | Example 3 | Example 4 | Example 5 | Comparative Example 1 |
|---|---|---|---|---|---|---|
| W1 (mm) | 10.7 | 10.7 | 10.7 | 9.0 | 13.0 | 10.7 |
| W2 (mm) | 8.7 | 8.7 | 8.7 | 10.4 | 6.4 | 8.7 |
| W3 (mm) | 6.5 | 4.5 | 6.5 | 1.7 | 8.2 | 0 |
| W4 (mm) | 14.5 | 12.5 | 14.5 | 9.7 | 16.2 | 8.0 |
| $\theta 1$ (°) | 9.7 | 9.7 | 11 | 0 | 20 | 9.7 |
| $\theta 2$ (°) | 3.3 | 3.3 | 6.6 | 0 | 15 | 3.3 |
| $\theta 3$ (°) | 2.6 | 2.6 | 3.5 | 0 | 10 | 2.6 |
| Traction performance (index) | 105 | 105 | 105 | 100 | 105 | 120 |
| Grip performance (index) | 130 | 115 | 135 | 100 | 135 | 95 |
| Maneuverability (index) | 120 | 120 | 105 | 100 | 90 | 90 |

From Table 1, it is seen that the tires according to the present invention exhibit an improved grip performance in turning as compared to the prior art while ensuring traction performance.

DESCRIPTION OF SYMBOLS

1: motorcycle tire (tire)

10: tread portion

11: center block

12: intermediate block

13: shoulder block

14: recess

20: side wall portion

30: bead portion

**Claims**

1.  A motorcycle tire comprising a tread portion (10) formed in an annular shape,

wherein

the motorcycle tire comprises a center block row composed of center blocks (11) formed on a tire equator (CL) in the tread portion (10), at least one or more intermediate block rows composed of intermediate blocks (12) formed on each tire width-direction outer side of the center block row, and shoulder block rows composed of shoulder blocks (13) constituting the outermost blocks in the tire width direction, and

the center blocks (11) and those intermediate blocks (12A) constituting a tire width-direction innermost intermediate block row among the intermediate block rows are separated in a tire circumferential direction and a tire width direction, **characterized in that**

the number of the intermediate block rows is two,

walls on the tire equator (CL) side of the intermediate blocks (12A) constituting a first intermediate block row arranged on the tire width-direction inner side, walls on the tire equator (CL) side of the intermediate blocks (12B) constituting a second intermediate block row arranged on the tire width-direction outer side, and walls on the tire equator (CL) side of the shoulder blocks (13) have a concave shape, and

when a smaller of angles that are formed by a straight line L1, which connects a rotational-direction leading end (12Aa) and a rotational-direction trailing end (12Ab) of a wall on the tire equator (CL) side, and a line connecting the rotational-direction trailing end (12Ab) of the wall on the tire equator (CL) side and a point (12Ac) of the wall on the tire equator (CL) side that is the farthest away from the straight line L1 in the respective intermediate blocks (12A) constituting the first intermediate block row is defined as $\theta1$; a smaller of angles that are formed by a straight line L2, which connects a rotational-direction leading end (12Ba) and a rotational-direction trailing end (12Bb) of a wall on the tire equator (CL) side, and a line connecting the rotational-direction trailing end (12Bb) of the wall on the tire equator (CL) side and a point (12Bc) of the wall on the tire equator (CL) side that is the farthest away from the straight line L2 in the respective intermediate blocks (12B) constituting the second intermediate block row is defined as $\theta2$; and a smaller of angles that are formed by a straight line L3, which connects a rotational-direction leading end (13a) and a rotational-direction trailing end (13b) of a wall on the tire equator (CL) side, and a line connecting the rotational-direction trailing end (13b) of the wall on the tire equator (CL) side and a point (13c) of the wall on the tire equator (CL) side that is the farthest away from the straight line L3 in the respective shoulder blocks (13) is defined as $\theta3$, a relationship represented by the following formula (1) is satisfied:

$$\theta1 > \theta2 > \theta3 \qquad (1).$$

2. The motorcycle tire according to claim 1, wherein the farther the intermediate blocks (12) are positioned on a rotational-direction trailing side from the respective shoulder blocks (13), the farther the tire width-direction outermost ends of the intermediate blocks (12) are located on a tire width-direction inner side.


**Patentansprüche**

1. Motorradreifen, der einen Laufflächenabschnitt (10) umfasst, der in einer ringförmigen Gestalt gebildet ist, wobei

der Motorradreifen eine Mittelblockreihe, die aus Mittelblöcken (11) besteht, die auf einem Reifenäquator (CL) in dem Laufflächenabschnitt (10) gebildet sind, mindestens eine oder mehr Zwischenblockreihen, die aus Zwischenblöcken (12) bestehen, die auf jeder in Reifenbreitenrichtung äußeren Seite der Mittelblockreihe gebildet sind, und Schulterblockreihen, die aus Schulterblöcken (13) bestehen, welche die äußersten Blöcke in der Reifenbreitenrichtung darstellen, umfasst und

die Mittelblöcke (11) und diejenigen Zwischenblöcke (12A), die eine in Reifenbreitenrichtung innerste Zwischenblockreihe unter den Zwischenblockreihen darstellen, in einer Reifenumfangsrichtung und einer Reifenbreitenrichtung getrennt sind, **dadurch gekennzeichnet, dass**

die Anzahl der Zwischenblockreihen zwei ist,

Wände auf der Reifenäquator- (CL) Seite der Zwischenblöcke (12A), die eine erste Zwischenblockreihe darstellen, die auf der in Reifenbreitenrichtung inneren Seite angeordnet ist, Wände auf der Reifenäquator- (CL) Seite der Zwischenblöcke (12B), die eine zweite Zwischenblockreihe darstellen, die auf der in Reifenbreitenrichtung äußeren Seite angeordnet ist, und Wände auf der Reifenäquator- (CL) Seite der Schulterblöcke (13) eine konkave Form aufweisen und

wenn ein kleinerer von Winkeln, die gebildet werden durch eine gerade Linie L1, die ein in Drehungsrichtung vorderes Ende (12Aa) und ein in Drehungsrichtung hinteres Ende (12Ab) einer Wand auf der Reifenäquator-(CL) Seite verbindet, und eine Linie, die das in Drehungsrichtung hintere Ende (12Ab) der Wand auf der Reifenäquator- (CL) Seite und einen Punkt (12Ac) der Wand auf der Reifenäquator- (CL) Seite, welcher der am weitesten von der geraden Linie L1 in den jeweiligen Zwischenblöcken (12A), welche die erste Zwischenblockreihe darstellen, entfernt ist, als θ1 definiert ist, ein kleinerer von Winkeln, die gebildet werden durch eine gerade Linie L2, die ein in Drehungsrichtung vorderes Ende (12Ba) und ein in Drehungsrichtung hinteres Ende (12Bb) einer Wand auf der Reifenäquator- (CL) Seite verbindet, und eine Linie, die das in Drehungsrichtung hintere Ende (12Bb) der Wand auf der Reifenäquator- (CL) Seite und einen Punkt (12Bc) der Wand auf der Reifenäquator- (CL) Seite, welcher der am weitesten von der geraden Linie L2 in den jeweiligen Zwischenblöcken (12B), welche die zweite Zwischenblockreihe darstellen, entfernt ist, verbindet, als θ2 definiert ist und ein kleinerer von Winkeln, die gebildet werden durch eine gerade Linie L3, die ein in Drehungsrichtung vorderes Ende (13a) und ein in Drehungsrichtung hinteres Ende (13b) einer Wand auf der Reifenäquator-(CL) Seite verbindet, und eine Linie, die das in Drehungsrichtung hintere Ende (13b) der Wand auf der Reifenäquator-(CL) Seite und einen Punkt (13c) der Wand auf der Reifenäquator- (CL) Seite, welcher der am weitesten von der geraden Linie L3 in den jeweiligen Schulterblöcken (13) entfernt ist, verbindet, als θ3 definiert ist, eine Beziehung erfüllt wird, die durch die folgende Formel (1) dargestellt wird:

$$\theta1 > \theta2 > \theta3 \quad (1).$$

2. Motorradreifen nach Anspruch 1, wobei, je weiter die Zwischenblöcke (12) auf einer in Drehungsrichtung hinteren Seite von den jeweiligen Schulterblöcken (13) entfernt angeordnet sind, desto weiter entfernt die in Reifenbreitenrichtung äußersten Enden der Zwischenblöcke (12) auf einer in Reifenbreitenrichtung inneren Seite angeordnet sind.

**Revendications**

1. Pneumatique pour motocycle, comprenant une partie de bande de roulement (10) formée en une forme annulaire, dans lequel

le pneumatique pour motocycle comprend une rangée de pavés centraux composée de pavés centraux (11) formés sur un équateur du pneumatique (CL) dans la partie de bande de roulement (10), au moins une ou plusieurs rangées de pavés intermédiaires composée de pavés intermédiaires (12) formés sur chaque côté externe, dans la direction de la largeur du pneumatique, de la rangée de pavés centraux, et des rangées de pavés d'épaulement composées de pavés d'épaulement (13) constituant les pavés externes extrêmes dans la direction de la largeur du pneumatique ; et
les pavés centraux (11) et les pavés intermédiaires (12A) constituant une rangée de pavés intermédiaires interne extrême, dans la direction de la largeur du pneumatique, parmi les rangées de pavés intermédiaires, sont séparés dans une direction circonférentielle du pneumatique et une direction de la largeur du pneumatique, **caractérisé en ce que** :

le nombre de rangées de pavés intermédiaires correspond à deux ;
des parois sur le côté de l'équateur du pneumatique (CL) des pavés intermédiaires (12A) constituant une première rangée de pavés intermédiaires agencée sur le côté interne, dans la direction de la largeur du pneumatique, des parois sur le côté de l'équateur (CL) du pneumatique, des pavés intermédiaires (12B) constituant une deuxième rangée de pavés intermédiaires agencée sur le côté externe, dans la direction de la largeur du pneumatique, et des parois, sur le côté de l'équateur (CL) du pneumatique, des pavés d'épaulement (13), ont une forme concave ; et
lorsqu'un angle réduit des angles formés par une ligne droite L1, qui relie une extrémité avant (12Aa), dans une direction de rotation, et une extrémité arrière (12Ab), dans une direction de rotation, d'une paroi sur le côté de l'équateur (CL) du pneumatique, et une ligne reliant l'extrémité arrière (12Ab) , dans la direction de rotation, de la paroi sur le côté de l'équateur (CL) du pneumatique, et un point (12Ac) de la paroi, sur le côté de l'équateur (CL) du pneumatique, le plus éloigné de la ligne droite L1 dans les pavés intermédiaires respectifs (12A), constituant la première rangée de pavés intermédiaires ; est défini comme θ1 ; un angle réduit des angles formés par une ligne droite L2 qui relie une extrémité avant (12Ba), dans une direction de rotation et une extrémité arrière (12Bb) dans la direction de rotation, d'une paroi, sur le côté de l'équateur (CL) du pneumatique, et une ligne reliant l'extrémité arrière (12Bb) de la paroi, sur le côté de l'équateur du p(CL) du pneumatique, et un point (12Bc) de la paroi, sur le côté de l'équateur (CL) du pneumatique, le plus éloigné de la ligne droite L2 dans les pavés intermédiaires respectifs (12B) , constituant la deuxième rangée de pavés intermédiaires, est défini comme θ2 ; et un angle réduit des angles formés par une ligne droite L3 qui relie une extrémité avant (13a), dans la direction de rotation , et une extrémité arrière (13b), dans la direction de rotation, d'une paroi, sur le côté de l'équateur (CL) du pneumatique, et une ligne reliant l'extrémité arrière, (13b), dans la direction de rotation, de la paroi, sur le côté de l'équateur (CL) du pneumatique, et un point (13c) de la paroi, sur le côté de l'équateur (CL) du pneumatique, le plus éloigné de la ligne droite L3 dans les pavés d'épaulement respectifs (13) est défini comme θ3, une relation représentée par la formule (1) suivante est satisfaite :

$$\theta 1 > \theta 2 > \theta 3 \quad (1).$$

2. Pneumatique pour motocycle selon la revendication 1, dans lequel, plus les pavés intermédiaires (12) sont éloignés, sur un côté arrière, dans la direction de rotation, des pavés d'épaulement respectifs (13), plus les extrémités externes extrêmes, dans la direction de la largeur du pneumatique des pavés intermédiaires (12), sont disposés sur un côté interne, dans la direction de la largeur du pneumatique.

FIG. 1

FIG. 2

FIG. 3 A

θa

12A

12Aa

12Ac

12Ab

L1

θ1

FIG. 3 B

θb

12B

12Ba

12Bc

12Bb

L2

θ2

FIG. 3 C

θc

13

13a

13c

13b

L3

θ3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2546079 A1
- JP 2001071711 A
- JP 2005193784 A
- JP 2015113111 A